# EUROPEAN PATENT APPLICATION

(11) **EP 2 302 894 A1**
(43) Date of publication of application: **30.03.2011**
(21) Application number: 10171906.0
(22) Date of filing: 04.08.2010
(51) Int. Cl.: H04N 1/00, H04N 1/48, G06F 3/048

(54) **Digital photo frame having a single processor**

(30) Priority: 11.08.2009 TW 098214796
(71) Applicant: Mustec Systems Inc., Hsin-Chu City, (TW)
(72) Inventor: Zhang, Hongliang, 310035 Hangzhou City (CN)
(74) Representative: Bittner, Thomas L.

(57) **Abstract**

The present invention relates to a digital photo frame (200) and a method (400) for controlling a digital photo frame. The digital photo frame (200) includes a single processor (201) to perform a function of a built-in scanner (210) and to convert a picture into an image data file for storage and reviewing. The method (400) includes steps of scanning (401) an image sample to generate an analog image data; providing (402) a processor (201) processing the analog image data into a digital image data and controlling a displaying unit (205). The present invention could achieve advantages of reducing production cost, enhancing stability, reducing steps for processing a signal and simplifying a design of a digital photo frame.

## Description

The present invention relates to a digital photo frame. More particularly, it relates to a digital photo frame having a single processor. A relevant technical solution is disclosed in the copending application bearing US Application No. 12/610,451 filed on November 2, 2009, the contents of which are incorporated herein for reference.

Nowadays, most of pictures are shot by a digital camera. In order to review these pictures, the image data of the digital camera should be transferred to a personal computer first, and then the pictures from the image data could be printed or displayed on a screen.

With the development of digital multi-media, a heavy and clumsy conventional photo album has been gradually replaced by a modem digital photo frame. A prior digital photo frame could transfer an image data to a memory in the digital photo frame via wired or wireless transmission and present the image data on the screen of the digital photo frame. Thus, the drawback, reviewing the pictures only via a personal computer, is settled and a digital photo frame makes reviewing the pictures more convenient and time-saving.

However, some people still use a traditional camera to take pictures and take the films to a photo studio for photos. It makes a scanner a necessary tool for transferring photos into an image data. When using a scanner, it is inevitable to connect the scanner to a computer. The use of a scanner is time-consuming and not convenient. Therefore, a digital photo frame with a built-in scanner consequently becomes a competitive product.

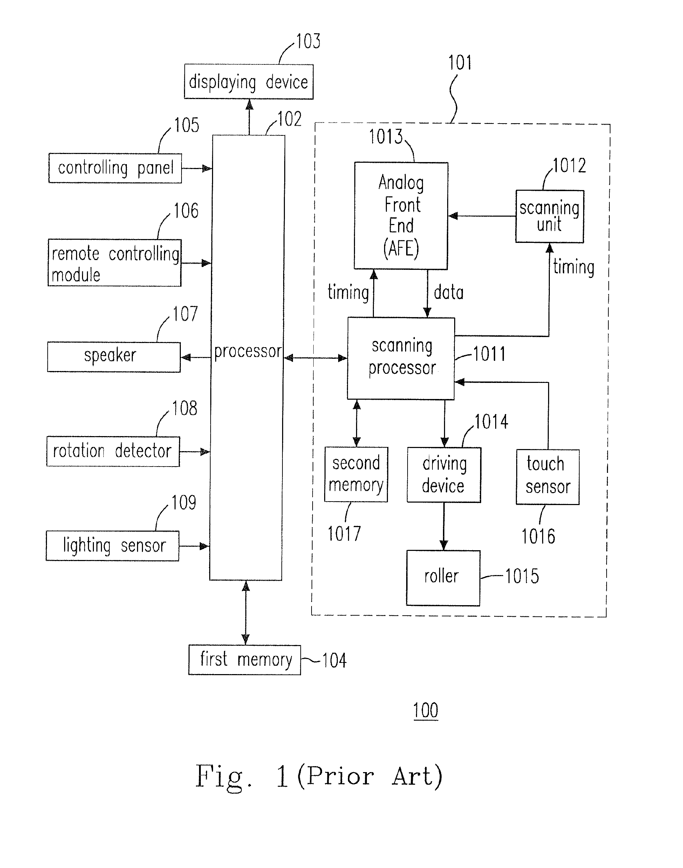

So far, digital photo frames having a built-in scanner are all based on two processors. Please refer to Fig. 1 which shows the electrical connection of a conventional digital photo frame 100. A processor 102 is coupled to a scanner 101, a displaying device 103, a first memory 104, a controlling panel 105, a remote controlling module 106, a speaker 107, a rotation detector 108 and a lighting sensor 109. The scanner 101 includes a scanning processor 1011, a scanning unit 1012, an Analog Front End (AFE) 1013, a driving device 1014, a roller 1015, a touch sensor 1016 and a second memory 1017. The conventional digital photo frame needs two processors to operate, i.e. the processor 102 and the scanning processor 1011. Thus, the drawbacks of the conventional digital photo frame 100 are increasing production cost, reducing stability, complicated steps for processing a signal and needing a design of a connecting interface. Furthermore, the conventional digital photo frame 100 includes the second memory 1017 so as to make the volume larger.

Therefore, it would be useful to invent a digital photo frame to circumvent all the above issues. In order to fulfill this need the inventors have proposed an invention "DIGITAL PHOTO FRAME HAVING A SINGLE PROCESSOR." The summary of the present invention is described as follows.

The object of the present invention is to provide a digital photo frame having a single processor and a method for controlling a digital photo frame. The purpose of the digital photo frame and the method is to reduce production cost, enhance stability, reduce steps for processing a signal and simplify a design of a digital photo frame.

According to the first aspect of the present invention, a digital photo frame includes: a scanning unit being free from a scanning processor, scanning a picture and generating an analog image data; an analog-to-digital converter coupled to the scanning unit and transforming the analog image data into a digital data; a displaying device; and a single processor coupled to the analog-to-digital converter, processing the digital data into a digital image data, and controlling the displaying device.

Preferably, the digital photo frame further includes a memory coupled to the single processor and storing the digital image data, wherein the displaying device is coupled to the single processor and outputting the digital image data and the single processor controls an output of the displaying device.

Preferably, the digital photo frame further includes: a logic unit coupled to the scanning unit and the single processor, and receiving a controlling signal from the single processor to control the scanning unit; a roller receiving the picture; and a driving device coupled to the logic unit and the roller, and activating the roller. Furthermore, the digital photo frame could include a sensor coupled to the single processor and signaling a message to the single processor when the picture contacts the roller. It is noted that the logic unit could be a Complex Programmable Logic Device (CPLD).

Preferably, the digital photo frame is provided, wherein the single processor includes a suspend mode for power saving.

Preferably, the digital photo frame further includes at least one data port coupled to the single processor and connecting to an electronic device, wherein the electronic device is one selected from a group consisting of an external scanner, a computer and a multimedia device.

Preferably, the digital photo frame is provided, wherein the scanning unit could be one of a Charge-coupled Device (CCD) and a Contact Image Sensor (CIS), the single processor could be a Digital Signal Processor (DSP) and the analog-to-digital converter could be an Analog Front End (AFE).

According to the second aspect of the present invention, a digital photo frame includes: a scanning unit being free from a scanning processor and generating an analog image data; a displaying device; and a single processor coupled to the scanning unit, processing the analog image data into a digital image data and controlling the displaying device.

Preferably, the digital photo frame further includes an analog-to-digital converter coupled to the scanning unit and the single processor, wherein the scanning unit scans a picture and generates the analog image data accordingly, the analog-to-digital converter transforms the analog image data into a digital data, and the single processor processes the digital data into a digital image data. It is noted that the analog-to-digital converter could be an Analog Front End (AFE).

Preferably, the digital photo frame further includes a memory coupled to the single processor and storing the digital image data, wherein the displaying device is coupled to the single processor and outputs the digital image data and the single processor controls an output of the displaying device.

Preferably, the digital photo frame further includes at least one data port connecting an external scanning device.

Preferably, the digital photo frame further includes: a roller receiving the picture; a sensor coupled to the single processor and transmitting a sensing signal to the single processor when the picture contacts the roller; and a driving device coupled to the single processor and the roller, and activating the roller.

Preferably, the digital photo frame further includes: a memory card slot coupled to the single processor; and a controlling panel coupled to and controlling the single processor.

Preferably, the digital photo frame is provided, wherein the scanning unit could be one of a Charge-coupled Device (CCD) and a Contact Image Sensor (CIS), and the single processor could be a Digital Signal Processor (DSP).

According to the third aspect of the present invention, a method for controlling a digital photo frame having a displaying unit includes the steps of: scanning an image sample to generate an analog image data; and providing a processor processing the analog image data into a digital image data and controlling the displaying unit. It is noted that the processor could control an output of the displaying unit.

The foregoing and other features and advantages of the present invention will be more clearly understood through the following descriptions with reference to the drawings:

Fig. 1 a diagram showing the electrical connection of a conventional digital photo frame;

Fig. 2 is a diagram showing the electrical connection of the first embodiment of the present invention;

Fig. 3 is a diagram showing the electrical connection of the second embodiment of the present invention; and

Fig. 4 is a diagram showing the flow chart of a method for controlling a digital photo frame.

The present invention will now be described more specifically with reference to the following embodiments. It is to be noted that the following descriptions of preferred embodiments of this invention are presented herein for the aspect of illustration and description only; it is not intended to be exhaustive or to be limited to the precise from disclosed.

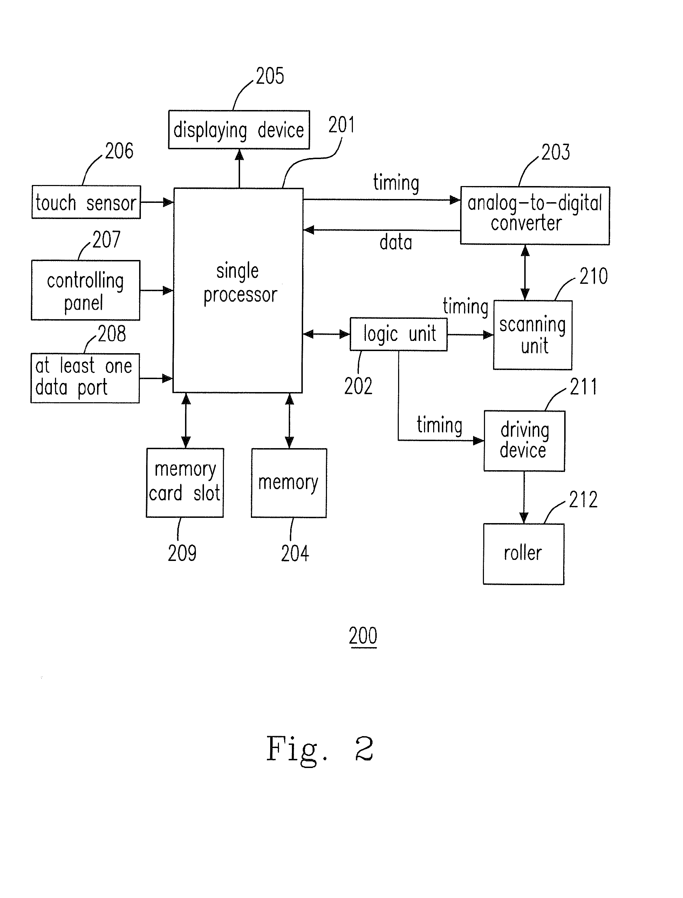

Please refer to Fig. 2 which shows the electrical connection of the first embodiment of the present invention. The first embodiment is a digital photo frame 200. The digital photo frame 200 includes a single processor 201, a logic unit 202, an analog-to-digital converter 203, a memory 204, a displaying device 205, a touch sensor 206, a controlling panel 207, at least one data port 208, a memory card slot 209, a scanning unit 210, a driving device 211 and a roller 212. The single processor 201 is coupled to the analog-to-digital converter 203, the memory 204, the displaying device 205, the touch sensor 206, the controlling panel 207, the at least one data port 208 and the memory card slot 209. The scanning unit 210 is coupled to the logic unit 202 and the analog-to-digital converter 203. The driving device 211 is coupled to the roller 212 and the logic unit 202.

The scanning unit 210 of the digital photo frame 200 is used to scan a picture provided by a user so as to generate an analog image data. The analog image data is processed by the analog-to-digital converter 203 and then transformed into a digital data. The digital data is operated into a digital image data by the single processor 201, such as a JPG file, a TIF file, a BMP file, a GIF file or other files with conventional formats. The digital image data is stored in the memory 204 via the single processor 201, such as hard discs, memory cards, a flash memory or any other conventional memory device. In addition, the single processor 201 could control the displaying device 205 to output the digital image data. It is noted that the scanning unit 210 could be a Charge-coupled Device (CCD) or a Contact Image Sensor (CIS) and the analog-to-digital converter 203 could be an Analog Front End (AFE) which transforms data into digital data.

The single processor 201 provides a timing signal to the analog-to-digital converter 203 and the logic unit 202. The logic unit 202 would perform logical operation to control the scanning unit 210 and the driving device 211 according to the signal. For instance, the touch sensor 206 would signal a message to the single processor 201 when a picture contacts or approaches the roller 212. Then, the single processor 201 controls the driving device 211 via the logic unit 202 to drive the roller 212 so as to send the picture into the digital photo frame 200. In the meantime, the single processor 201 controls the scanning unit 210 via the logic unit 202 to scan the picture. Finally, the roller 212 ejects the picture from the digital photo frame 200. Furthermore, the single processor 201 could include a Real Time Clock (RTC), wherein the frequency of the RTC is preferably 32.768 MHz and the main frequency of the single processor 201 is preferably 12 MHz. Moreover, the digital photo frame 200 could have a suspend mode. That is to say, when the digital photo frame 200 is active for a period of time and do not process any action, the digital photo frame 200 would be set into suspend mode for power saving. It is noted that the single processor 201 could be a Digital Signal Processor (DSP) and the logic unit 202 could be a Complex Programmable Logic Device (CPLD). Besides, the digital photo frame 200 without the touch sensor 206, the driving device 211 and the roller 212 could be applied to a digital photo frame having a flatbed scanner.

By using the controlling panel 206, users can input instructions to operate the digital photo frame 200, such as reviewing pictures, scanning, storing data and so on. The memory card slot 209 is connected to a memory card to receive data from the memory card or transmit data to the memory card. The memory card slot 209 could be a SD card slot, CF card slot, MS card slot, xD card slot, MMC card slot, Multi in 1 card slot and other conventional memory card slot. The at least one data port 208 could be connected to a computer or a multimedia device, such as a digital camera, a printer, a scanner, a hard drive, a camcorder and so on. Furthermore, the interface adopted by the at least one data port 208 could be an Universal Serial Bus (USB 1.0, USB 1.1, USB 2.0, USB 3.0), a Recommended Standard 232 (RS232) interface, an Institute of Electrical and Electronics Engineers 1394 (IEEE 1394) interface or other conventional interfaces. It is noted that the plug of the at least one data port 208 could be mini-usb plug or other conventional USB plug.

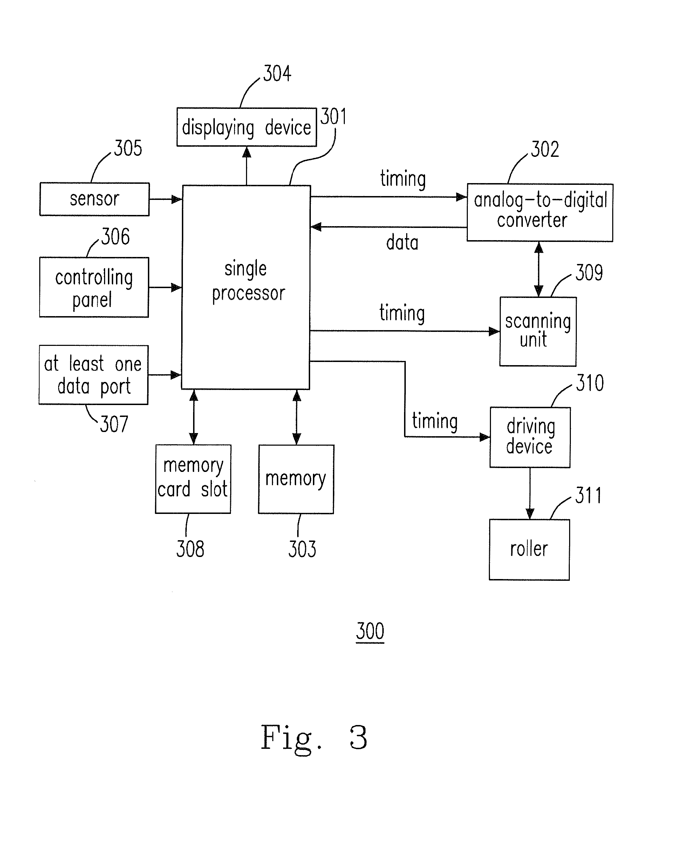

Please refer to Fig. 3 which shows the electrical connection of the second embodiment of the present invention. The second embodiment is a digital photo frame 300. The digital photo frame 300 includes a single processor 301, an analog-to-digital converter 302, a memory 303, a displaying device 304, a sensor 305, a controlling panel 306, at least one data port 307, a memory card slot 308, a scanning unit 309, a driving device 310 and a roller 311. The single processor 301 is coupled to the analog-to-digital converter 302, the memory 303, the displaying device 304, the sensor 305, the controlling panel 306, the at least one data port 307 and the memory card slot 308. The scanning unit 309 is coupled to the single processor 301 and the analog-to-digital converter 302. The driving device 310 is coupled to the roller 311 and the single processor 301.

The scanning unit 309 of the digital photo frame 300 is used to scan a picture provided by a user so as to generate an analog image data. The analog image data is processed by the analog-to-digital converter 302 and then transformed into a digital data. The digital data is processed into a digital image data by the single processor 301, such as a JPG file, a TIF file, a BMP file, a GIF file or other files with conventional formats. The digital image data is stored in the memory 303 via the single processor 301, such as hard discs, memory cards, a flash memory or any other conventional memory device. In addition, the single processor 301 could control the displaying device 304 to output the digital image data. It is noted that the scanning unit 309 could be a Charge-coupled Device (CCD) or a Contact Image Sensor (CIS) and the analog-to-digital converter 302 could be an Analog Front End (AFE) which transforms data into digital data.

The single processor 301 provides a timing signal to the analog-to-digital converter 302, the scanning unit 309 and the driving device 310. The single processor 301 would signal to control the scanning unit 309 and the driving device 310. For instance, the sensor 305 would signal a message to the single processor 301 when a picture contacts or approaches the roller 311. Then, the single processor 301 controls the driving device 310 to drive the roller 311 so as to send the picture into the digital photo frame 300. In the meantime, the single processor 301 controls the scanning unit 309 to scan the picture. Finally, the roller 311 ejects the picture from the digital photo frame 300. Furthermore, the single processor 301 could include a Real Time Clock (RTC), wherein the frequency of the RTC is preferably 32.768 MHz and the main frequency of the single processor 301 is preferably 12 MHz. Moreover, the digital photo frame 300 or the single processor 301 could have a suspend mode. That is to say, when the digital photo frame 300 is active for a period of time and do not process any action, the digital photo frame 300 would be set into suspend mode for power saving. It is noted that the single processor 301 could be a Digital Signal Processor (DSP). Besides, the digital photo frame 300 without the sensor 305, the driving device 310 and the roller 311 could be applied to a digital photo frame having a flatbed scanner.

By using the controlling panel 306, users can input instructions to operate the digital photo frame 300, such as reviewing pictures, scanning, storing data and so on. The memory card slot 308 is connected to a memory card to receive data from the memory card or transmit data to the memory card. The memory card slot 308 could be a SD card slot, CF card slot, MS card slot, xD card slot, MMC card slot, Multi in 1 card slot and other conventional memory card slot. The at least one data port 307 could be connected to a computer or a multimedia device, such as a digital camera, a printer, a scanner, a hard drive, a camcorder and so on. Furthermore, the interface adopted by the at least one data port 307 could be an Universal Serial Bus (USB 1.0, USB 1.1, USB 2.0, USB 3.0), a Recommended Standard 232 (RS232) interface, an Institute of Electrical and Electronics Engineers 1394 (IEEE 1394) interface or other conventional interfaces. It is noted that the plug of the at least one data port 307 could be mini-usb plug or other conventional USB plug.

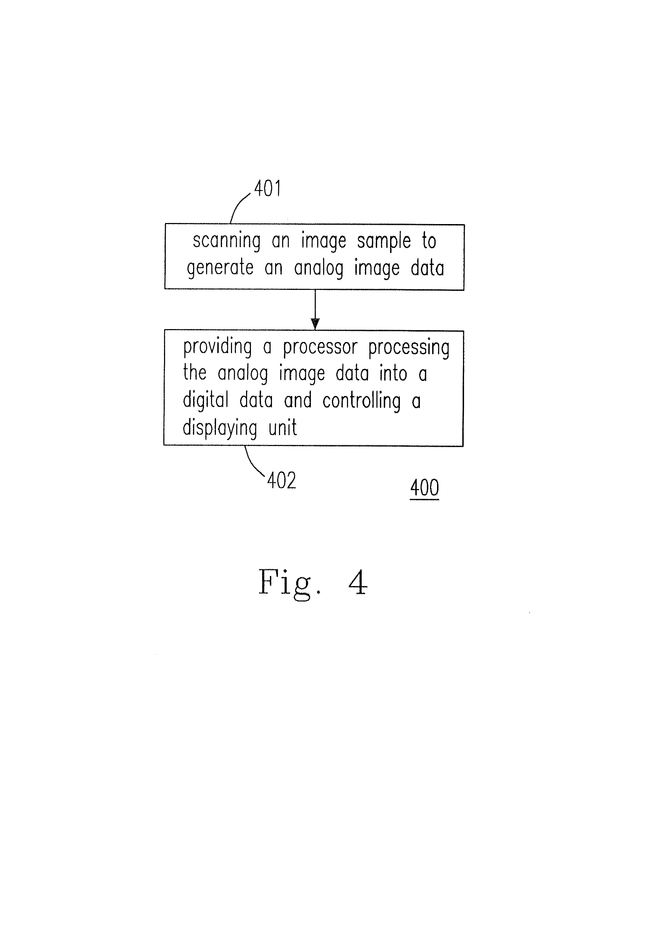

Please refer to Fig. 4 which shows the flow chart of a method for controlling a digital photo frame. The method 400 includes a step 401 of scanning an image sample to generate an analog image data and a step 402 of providing a processor processing the analog image data into a digital image data and controlling a displaying unit. It is noted that the processor could control any unit or device in the digital photo frame.

A digital photo frame with a single processor is provided in the invention. A preferred embodiment is a digital photo frame having only one processor and only one memory. The only one processor could control any unit in the digital photo frame, such as display device, and transform analog data into a digital image data. In contrast, a conventional digital photo frame needs an additional scanning processor to transform data into digital image data and an additional memory to store the digital image data. In other words, the conventional digital photo frame needs two processors and two memories. Therefore, the present invention could achieve the advantages of reducing production cost, enhancing stability, reducing steps for processing a signal and simplifying a design of a digital photo frame.

The features disclosed in the above description, the claims and the drawings, may be relevant either individually or in any combination to the carrying out the invention in its various embodiments.

## Claims

1. A digital photo frame (200), **characterized by** comprising:
a scanning unit (210) being free from a scanning processor (1011) and generating an analog image data;
a displaying device (205); and
a single processor (201) coupled to the scanning unit (210), processing the analog image data into a digital image data and controlling the displaying device (205).

2. A digital photo frame (200) as claimed in claim 1 further **characterized by** comprising an analog-to-digital converter (203) coupled to the scanning unit (210) and the single processor (201), wherein the scanning unit (210) scans a picture and generates the analog image data accordingly, the analog-to-digital converter (203) transforms the analog image data into a digital data, and the single processor (201) processes the digital data into a digital image data.

3. A digital photo frame (200) as claimed in claims 1 or 2 further **characterized by** comprising:
a logic unit (202) coupled to the scanning unit (210) and the single processor (201), and receiving a controlling signal from the single processor (201) to control the scanning unit (210);
a roller (212) receiving the picture; and
a driving device (211) coupled to the logic unit (202) and the roller (212), and activating the roller (212).

4. A digital photo frame (200) as claimed in claim 3, **characterized in that** the logic unit (202) is a Complex Programmable Logic Device (CPLD).

5. A digital photo frame as claimed in claim 2, **characterized in that** the analog-to-digital converter (203) is an Analog Front End (AFE).

6. A digital photo frame (200) as claimed in any one of claims 1 to 5 further **characterized by** comprising a memory (204) coupled to the single processor (201) and storing the digital image data, wherein the displaying device (205) is coupled to the single processor (201) and outputs the digital image data and the single processor (201) controls an output of the displaying device (205).

7. A digital photo frame (200) as claimed in any one of claims 1, 2, 5 and 6 further **characterized by** comprising:
a roller (212) receiving the picture;
a sensor (206) coupled to the single processor (201) and transmitting a sensing signal to the single processor (201) when the picture contacts the roller (212); and
a driving device (211) coupled to the single processor (201) and the roller (212), and activating the roller (212).

8. A digital photo frame (200) as claimed in any one of claims 1 to 7 further **characterized by** comprising:
a memory card slot (209) coupled to the single processor (201); and
a controlling panel (207) coupled to and controlling the single processor (201).

9. A digital photo frame (200) as claimed in any one of claims 1 to 8, **characterized in that** the scanning unit (210) is one of a Charge-coupled Device (CCD) and a Contact Image Sensor (CIS), and the single processor (201) is a Digital Signal Processor (DSP).

10. A digital photo frame (200) as claimed in any one of claims 1 to 9, **characterized in that** the single processor (201) comprises a suspend mode for power saving.

11. A digital photo frame (200) as claimed in any one of claims 1 to 10 further **characterized by** comprising at least one data port (208) coupled to the single processor (201) and connecting to an electronic device.

12. A digital photo frame (200) as claimed in claim 11, **characterized in that** the electronic device is one selected from a group consisting of an external scanner, a computer and a multimedia device.

13. A method (400) for controlling a digital photo frame (200) having a displaying unit (205), **characterized by** comprising the steps of:
scanning (401) an image sample to generate an analog image data (401); and
providing (402) a processor (201) processing the analog image data into a digital image data and controlling the displaying unit (205).

14. A method (400) as claimed in claim 13, **characterized in that** the processor (201) controls an output of the displaying unit (205).
